# EUROPEAN PATENT SPECIFICATION

(11) **EP 2 717 435 B1**
(45) Date of publication and mention of the grant of the patent: **01.07.2020**
(21) Application number: 12199465.1
(22) Date of filing: 27.12.2012
(51) Int. Cl.: H02K 3/487, H02K 3/00, H02K 3/46, H02K 3/50, H02K 3/52

(54) **Electric motor**
Elektromotor
Moteur électrique

(30) Priority: 02.10.2012 KR 20120109668
(43) Date of publication of application: 09.04.2014
(73) Proprietor: LG Electronics Inc., Youngdungpo-gu Seoul 150-721 (KR)
(72) Inventor: Chun, Kwangwook, Seoul (KR); Han, Seungdo, Seoul (KR); Shin, Sunguk, Seoul (KR)
(74) Representative: Vossius & Partner Patentanwälte Rechtsanwälte mbB

(56) References cited:
- WO-A1-03/019748
- WO-A1-2012/007920
- US-A1- 2010 283 352

## Description

The present disclosure relates to an electric motor, and particularly, to an electric motor capable of preventing the occurrence of a short-circuit of a rotor.

As well known, an electric motor is a rotary electric machine for converting electric energy into mechanical energy.

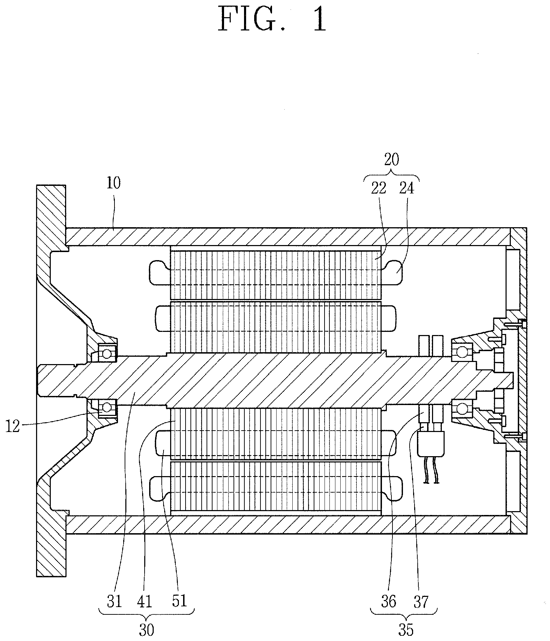

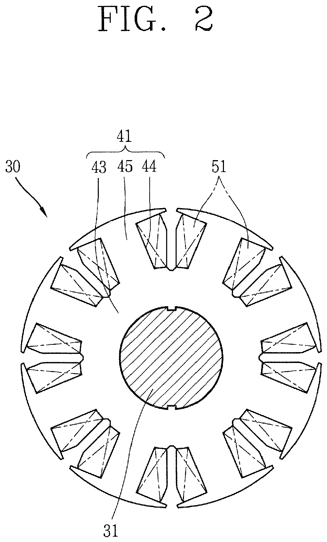

FIG. 1 is a sectional view of an electric motor in accordance with the conventional art, and FIG. 2 is a sectional view of a rotor of FIG. 1.

As shown in FIG. 1, the electric motor includes a stator 20, and a rotor 30 disposed so as to be rotatable with respect to the stator 20.

A frame or a case 10 (hereinafter, will be expressed as a case 10) is provided outside the stator 20.

A bearing 12 for rotatably supporting the rotor 30 is provided at the case 10.

The stator 20 includes a stator core 22, and a stator coil 24 wound on the stator core 22.

The rotor 30 includes a shaft 31, a rotor core 41 coupled to the shaft 31, and a rotor coil 51 wound on the rotor core 41.

The rotor core 41 includes a hub 43 to which the shaft 31 is coupled, and a plurality of poles 45 protruding from the hub 43 in a radial direction.

The poles 45 are spaced from each other at constant intervals in a circumferential direction.

A slot 44 is formed between the two neighboring poles 45.

The rotor coil 51 is wound on each pole 45 a plurality of times.

A power supply unit 35 for supplying power to the rotor coil 51 is provided at the shaft 31.

The power supply unit 35 includes commutators or slip rings 36 coupled to the shaft 31, and brushes 37 contacting the commutators or the slip rings 36 so as to be conducted.

However, the conventional electric motor has the following problems.

Firstly, when the rotor 30 rotates, coil ends or end turns protruding from two ends of the rotor core 41 in an axial direction are pulled in a radial direction. This may cause a short-circuit of the rotor coil 51.

Secondly, when the electric motor is driven, the rotor coil 51 does not smoothly emit heat due to a relatively small contact area with air. This may cause temperature increase of the rotor coil 51. If the rotor coil 51 has drastic temperature increase, the electric motor may have a lowered output.

WO 2012/007920 A1 discloses a synchronous motor of electric vehicle drives, which includes support rings protecting winding heads projecting from the sheet stack in the axial direction against, preferably radial, stresses.

WO 03/019748 A1 discloses a generator rotor having a cap device preventing wire windings of the coils from moving outward away from a shaft beyond outer radial limits.

US 2010/283352 A1 discloses an end plate for a generator i providing support for the end turn windings. The end plate is generally cylindrical and having a central bore to receive a rotor shaft

Therefore, an aspect of the detailed description is to provide an electric motor capable of preventing a short-circuit of a rotor coil occurring from a centrifugal force when a rotor rotates.

Another aspect of the detailed description is to provide an electric motor capable of preventing a short-circuit of a rotor coil, and capable of enhancing a cooling performance of the rotor coil.

To achieve these and other advantages and in accordance with the purpose of this specification, as embodied and broadly described herein, there is provided an electric motor, comprising: a stator; and a rotor disposed so as to be rotatable with respect to the stator, wherein the rotor includes a rotor core having a plurality of poles and slots; a shaft coupled to a central portion of the rotor core; a rotor coil wound on the rotor core; and a coil supporting member provided at the rotor core, and configured to support the rotor coil such that the rotor coil is prevented from being separated from the rotor core in a radial direction when the rotor rotates.

The coil supporting members may be coupled to the rotor core before the rotor coil is wound on the rotor core. And, the rotor coil may be simultaneously wound on the rotor core and the coil supporting members.

The coil supporting members may include a hub coupled to the shaft, a plurality of spokes extending from the hub in a radial direction, and supporting portions protruding from the ends of the spokes in an axial direction, and configured to support the coil ends of the rotor coil.

The coil supporting members may be coupled to the rotor core after the rotor coil is wound on the rotor core.

Each pole may be provided with a pole shoe extending in a circumferential direction. And, the coil supporting members may include coil end accommodation portions for accommodating the coil ends of the rotor coil, and supporting plates disposed between the pole shoes.

The coil supporting members may be coupled to the rotor core in an axial direction of the rotor core.

The coil supporting members may be provided with an outer circumference having the same diameter as that of an outer circumference of the rotor core. And, the coil end accommodation portions and the supporting plates may be integrally formed with each other, or may be configured so as to be insertion-coupled.

The coil supporting members may further include reinforcing members disposed on the circumferences of the coil supporting members, and configured to reinforce the supporting portions.

The reinforcing members may have a fiber or wire-shape, and may be wound on the supporting portions a plurality of times.

The reinforcing members may have a ring shape, and may be insulation-coated. And, the reinforcing member may be configured such that an inner surface thereof contacts an outer surface of the supporting portions.

A plurality of insertion protrusions inserted into a space between the supporting portions may be provided at the reinforcing members.

Each pole of the rotor core may be provided with a pole shoe extending in a circumferential direction, and the pole shoe of the rotor core may have a thickness smaller than that of the supporting portion in a radial direction. A spacer having a thickness corresponding to the difference between the two thicknesses of the supporting portion and the pole shoe, may be provided at an inner side of the pole shoe of the rotor core.

The coil supporting members may be formed of a synthetic resin member, and reinforcing members may be insert injection-molded thereinto.

The reinforcing members may be formed as a non-magnetic metallic member.

The coil supporting members may be formed of a material having a higher heat transfer performance than the rotor core.

The coil supporting member may include a body configured as a non-magnetic metallic member, and a coating layer formed by coating an insulating member on the surface of the body.

The coil supporting member may be formed of a non-magnetic metallic member, and the surface thereof may be coated with an insulating member.

The coil supporting member may include a first coil supporting member disposed at one end of the rotor core, and having the coil end accommodation portions and the supporting plates integrally formed with each other; and a second coil supporting member disposed at another rend of the rotor core, and having the coil end accommodation portions, and insertion portions for inserting the ends of the supporting plates.

The rotor coil may be provided with a plurality of coil portions wound on the circumference of each pole. The coil supporting members may be coupled to two ends of the rotor core in an axial direction, such that coil ends are inserted into the coil end accommodation portions, and such that the supporting plate is inserted into a space between the coil portions.

The reinforcing members may be configured such that the outer surfaces thereof are insulation-coated by an insulating member.

Further scope of applicability of the present application will become more apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from the detailed description.

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a sectional view of an electric motor in accordance with the conventional art;
FIG. 2 is a sectional view of a rotor of FIG. 1;
FIG. 3 is a sectional view of an electric motor according to an embodiment of the present invention;
FIG. 4 is a perspective view of a rotor of FIG. 3;
FIG. 5 is a perspective view showing a state before a rotor core and a coil supporting member of FIG. 4 are coupled to each other;
FIG. 6 is a sectional view taken along line 'VI-VI' in FIG. 5;
FIG. 7 is a modification example of the coil supporting member of FIG. 5, which corresponds to FIG. 6;
FIG. 8 is a modification example of the rotor of FIG. 2;
FIG. 9 is a sectional view of an electric motor according to another embodiment of the present invention;
FIG. 10 is a perspective view showing a state before a rotor core and coil supporting members of FIG. 9 are coupled to each other;
FIG. 11 is a sectional view of an electric motor according to still another embodiment of the present invention;
FIG. 12 is a perspective view of a rotor of the electric motor of FIG. 11;
FIG. 13 is a perspective view showing a state before a rotor core and coil supporting members of FIG. 12 are coupled to each other;
FIG. 14 is a modification example of a rotor of FIG. 11;
FIG. 15 is a sectional view of an electric motor according to yet still another embodiment of the present invention;
FIG. 16 is an enlarged view of a rotor of FIG. 15
FIG. 17 is disassembled perspective view of the rotor of FIG. 16; and
FIG. 18 is a sectional view of FIG. 17.

Description will now be given in detail of the exemplary embodiments, with reference to the accompanying drawings. For the sake of brief description with reference to the drawings, the same or equivalent components will be provided with the same reference numbers, and description thereof will not be repeated.

Hereinafter, embodiments of the present invention will be explained in more details with reference to the attached drawings.

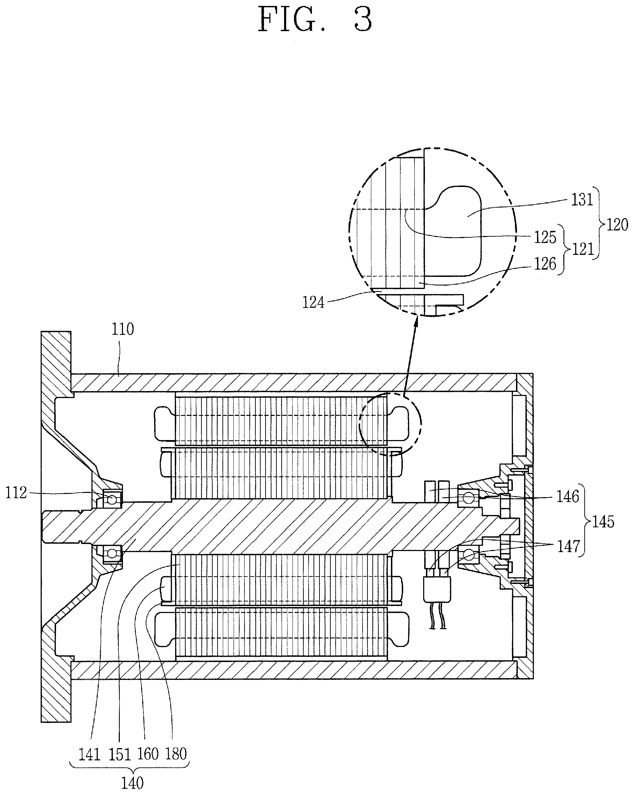

As shown in FIG. 3, an electric motor according to the present invention includes a stator 120, and a rotor 140 disposed so as to be rotatable with respect to the stator 120. And, the rotor 140 includes a rotor core 151 having a plurality of poles 155 and slots 159, a shaft 141 coupled to a central portion of the rotor core 151, a rotor coil 160 wound on the rotor core 151, and coil supporting members 180 provided at the rotor core 151, and configured to support the rotor coil 160 such that the rotor coil 160 is prevented from being separated from the rotor core 151 in a radial direction when the rotor 140 rotates.

A case 110 may be provided at the outer periphery of the stator 120.

The case 110 may be formed to correspond to the shape of the stator 120 so that the stator 120 can be accommodated therein.

A bearing 112 for rotatably supporting the shaft 141 may be provided at the case 110.

The bearing 112 may be provided at two sides of the case 110, respectively.

The stator 120 may include a stator core 121, and a stator coil 131 wound on the stator core 121.

The stator core 121 may be provided with a plurality of slots 125 and teeth 126. For instance, the stator coil 131 may be configured to be wound on the plurality of slots 125.

A rotor accommodating space 124 for rotatably accommodating the rotor 140 may be provided at a central region of the stator core 121.

The rotor 140 may include a rotor core 151 having a plurality of poles 155 and slots 159, a shaft 141 coupled to a central portion of the rotor core 151, a rotor coil 160 wound on the slots 159 of the rotor core 151, and coil supporting members 180 provided at the rotor core 151, and configured to support the rotor coil 160 so that the rotor coil 160 cannot be separated from the rotor core 151 in a radial direction when the rotor 140 rotates.

Two sides of the shaft 141 may be rotatably supported by the bearing 112.

A power supply unit 145 for supplying power to the rotor coil 160 may be provided at the shaft 141.

The power supply unit 145 may include, for example, commutators or slip rings 146 (hereinafter, will be expressed as 'slip rings') coupled to the shaft 141, and brushes 147 contacting the slip rings 146 so as to be conducted.

The rotor core 151 may include, for example, a plurality of poles 155 spaced from each other at the same intervals, and a plurality of slots 159 disposed between the poles 155.

More specifically, the rotor core 151 may include a hub 152, a plurality of poles 155 protruding on the circumference of the hub 152 in a radial direction, and spaced from each other at the same intervals, and a plurality of slots 159 disposed between the poles 155.

A shaft hole 153 for inserting the shaft 141 may be penetratingly-formed at the hub 152.

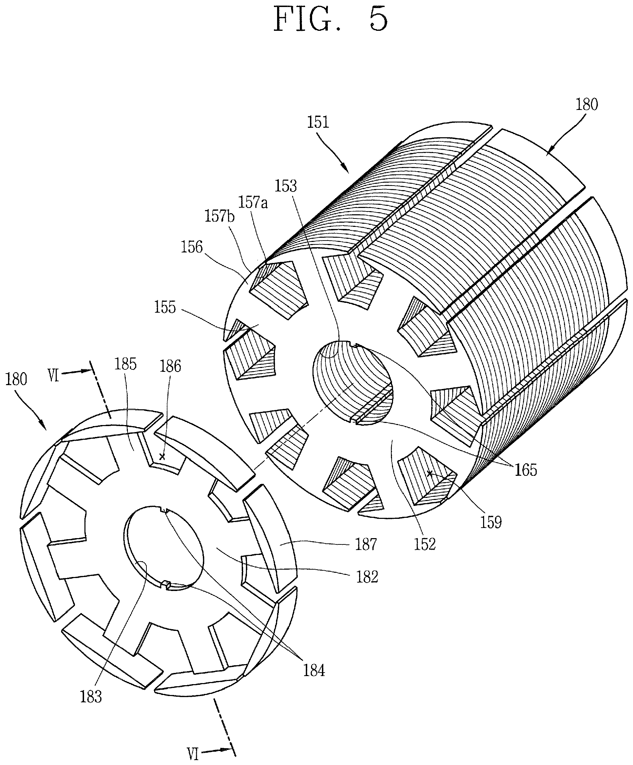

Protrusions 165 see Fig. 5 protruding in a radial direction and protrusion accommodation portions (not shown) for accommodating the protrusions 165 and restricting the protrusions 165 in a rotation direction, may be provided at contact regions between the hub 152 and the shaft 141. Under such configuration, slip occurring between the shaft 141 and the hub 152 can be prevented when the rotor 140 rotates.

More specifically, the protrusions 165 protrude in a radial direction from an inner diameter of the shaft hole 153 of the hub 152. And, the protrusion accommodation portions may be concaved from an outer surface of the shaft 141 by a predetermined depth in a radial direction, so that the protrusions 165 can be accommodated therein.

A pole shoe 156 extending in a circumferential direction may be provided at the end of each pole 155.

Each pole shoe 156 may extend to two sides from the center of the pole 155.

Each pole shoe 156 may be formed so that the thickness (in a radial direction) thereof can be gradually decreased towards the two sides. For instance, an outer surface 157b of each pole shoe 156 may be formed in an arc shape, and an inner surface 157a thereof may be formed in a straight line shape.

The rotor coil 160 may be provided with a plurality of coil portions 162 wound on the circumference of each pole 155.

Each coil portion 162 may be provided with coil ends 163 protruding from two ends of the rotor core 151 in an axial direction.

Each coil portion 162 may be serially connected to each other.

Each coil portion 162 may be wound on each pole 155 in a different direction so that different poles (N and S) can be formed.

The coil portions 162 may be wound around the pole shoes 156 so that the interval therebetween can be increased.

Coil supporting members 180 may be provided at two ends of the rotor core 151.

For instance, the coil supporting members 180 may be coupled to the rotor core 151 before the rotor coil 160 is wound on the rotor core 151. That is, the coil supporting members 180 are coupled to two ends of the rotor core 151, and then the rotor coil 160 may be wound on the rotor core 151 and the coil supporting members 180.

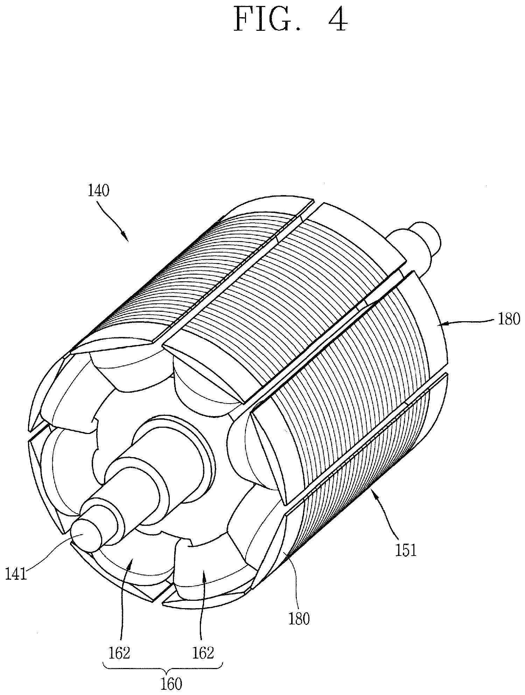

For instance, as shown in FIGS. 4 and 5, the coil supporting members 180 may include a hub 182 coupled to the shaft 141, a plurality of spokes 185 extending from the hub 182 in a radial direction, and supporting portions 187 protruding from the ends of the spokes 185 in an axial direction, and configured to support the coil ends 163 of the rotor coil 160. The supporting portions 187 are disposed outside the coil ends 163 in a radial direction of the rotor core 151, and contact the outer circumference (outer surface) of the coil ends 163. Under such configuration, the supporting portions 187 can support the coil ends 163 so as to be maintained at the initial position, against a centrifugal force applied in a radial direction when the rotor 140 rotates.

The coil supporting members 180 may be formed of a material having a higher heat transfer performance than the rotor core 151 (e.g., aluminum). Accordingly, since heat of the rotor coil 160 is transferred to the coil supporting members 180, cooling of the rotor coil 160 can be accelerated.

The coil supporting members 180 may be configured as a non-magnetic metallic member (e.g., aluminum, stainless steel, etc.). Accordingly, leakage of a magnetic flux due to the coil supporting members 180 can be prevented.

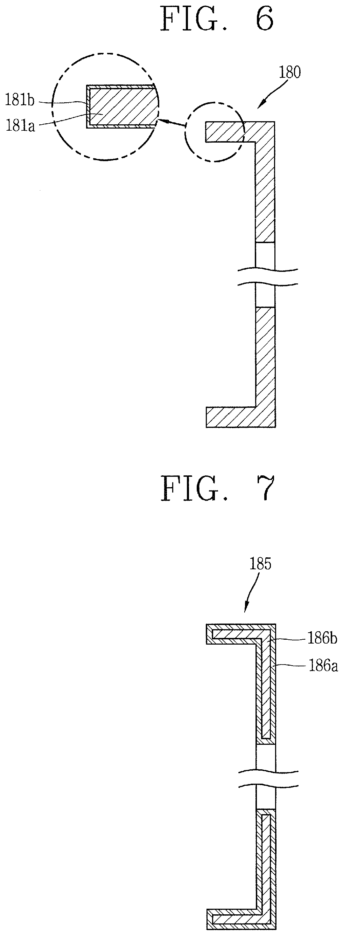

For instance, as shown in FIG. 6, the coil supporting members 180 may include a body 181a configured as a non-magnetic metallic member, and a coating layer 181b formed by coating an insulating member (electric insulating member) on the outer surface of the body 181a.

As shown in FIG. 7, the coil supporting member 185 may include a body 186a formed of a synthetic resin member, and reinforcing members 186b insert injection-molded in the body 186a. The reinforcing members 186b may be formed as metallic members, for instance.

A shaft hole 183 for inserting the shaft 141 may be penetratingly-formed at the hub 182 of the coil supporting members 180.

Protrusions 184 protruding in a radial direction and protrusion accommodation portions (not shown) for accommodating the protrusions 184 may be provided at contact regions between the hub 182 and the shaft 141. Under such configuration, slip occurring between the shaft 141 and the hub 182 when the rotor 140 rotates, can be prevented.

Reinforcing members 190 may be provided at the outer peripheries of the coil supporting members 180. Under such configuration, when the rotor 140 rotates, the coil supporting members 180 and the rotor coil 160 can be more stably supported.

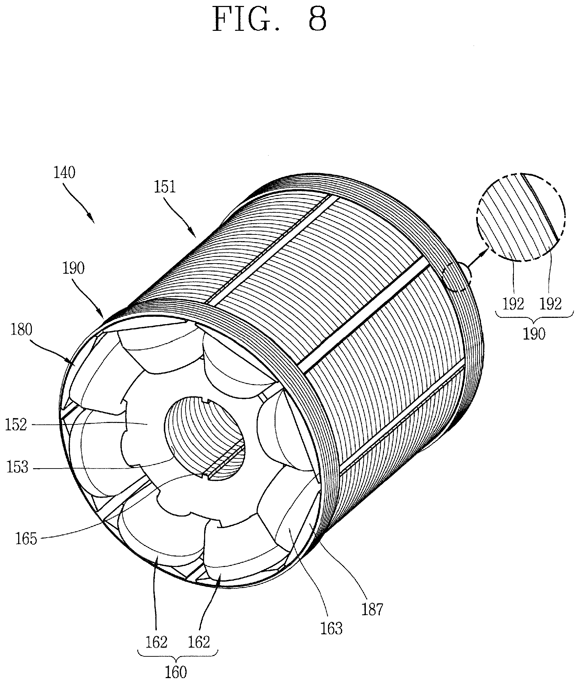

For instance, as shown in FIG. 8, the reinforcing members 190 may be formed in a ring shape by winding fiber or wire-shaped reinforcing members on the outer surfaces of the coil supporting members 180 (outer surfaces of the supporting members) a plurality of times.

More specifically, the reinforcing members 190 may be formed by winding glass fibers 192 on the outer surfaces of the coil supporting members 180 a plurality of times. As the coil supporting members 180 are supported by the glass fibers 192 having a high specific strength, the coil supporting members 180 and the rotor coil 160 can be effectively supported without increasing the weight of the reinforcing members 190.

Under such configuration, the coil supporting members 180 are provided at two ends of the rotor core 151, and the rotor coil 160 is wound on the rotor core 151 and the coil supporting members 180. The reinforcing members 190 may be provided on the circumference of the coil supporting members 180.

Once the electric motor is driven, power is supplied to the stator coil 131 and the rotor coil 160, respectively.

Once power is supplied to the stator coil 131, a magnetic field for rotating the rotor 140 is formed.

Once power is supplied to the rotor coil 160, the coil portions 162 are formed to alternately have different poles (N and S). And, each coil portion interacts (attracts and repulses) with a magnetic field formed by the stator coil 131. As a result, the rotor 140 can rotate about the shaft 141.

When the rotor 140 rotates, the coil supporting members 180 prevent the respective coil portions 162 of the rotor coil 160 from moving in a radial direction by a centrifugal force. Accordingly, the occurrence of a short-circuit of the rotor coil 160 can be prevented.

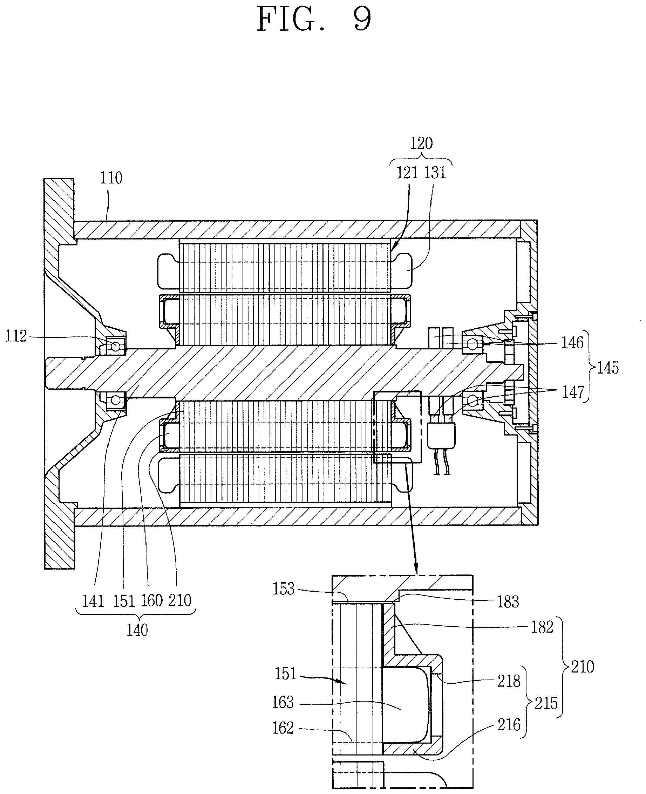

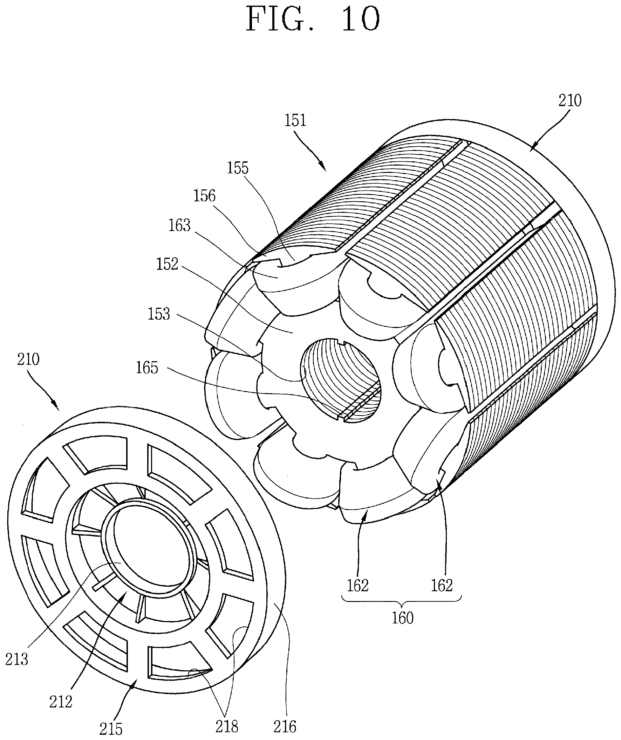

Hereinafter, another embodiment of the present invention will be explained with reference to FIGS. 9 and 10.

The same reference numerals will be given to the same parts as those of the aforementioned embodiment, and explanations thereof will be omitted.

As shown in FIG. 9, the electric motor according to another embodiment of the present invention may include a stator 120, and a rotor 140 disposed so as to be rotatable with respect to the stator 120. And, the rotor 140 may include a rotor core 151 having a plurality of poles 155 and slots 159, a shaft 141 coupled to a central portion of the rotor core 151, a rotor coil 160 wound on the rotor core 151, and coil supporting members 210 provided at the rotor core 151, and configured to support the rotor coil 160 so that the rotor coil 160 cannot be separated from the rotor core 151 in a radial direction when the rotor 140 rotates.

A case 110 may be provided at the outer periphery of the stator 120.

A bearing 112 for rotatably supporting the rotor 140 may be provided at the case 110.

A power supply unit 145 having slip rings 146 and brushes 147, and configured to supply power to the rotor coil 160 may be provided at the shaft 141.

The rotor core 151 may be provided with a plurality of poles 155 and slots 159.

A rotor coil 160 having a plurality of coil portions 162 wound on the circumferences of the poles 155, may be wound on the rotor core 151.

The coil supporting members 210 may be wound on the rotor coil 160, and then may be coupled to the rotor core 151.

For instance, as shown in FIG. 10, the coil supporting members 210 may include a hub 212 coupled to the shaft 141, and coil end coupling portions 215 disposed on the circumference of the hub 212 and coupled to the coil ends 163.

A shaft hole 213 for inserting the shaft 141 may be penetratingly-formed at the hub 212.

The coil end coupling portion 215 may be provided with an outer wall portion 216 disposed to contact the outer surface of each coil end 163 in a radial direction of the rotor core 151. Under such configuration, the coil ends 163 can be supported against a centrifugal force applied to the coil ends 163 when the rotor 140 rotates.

For instance, the outer wall portion 216 may be formed in a ring shape.

The coil end coupling portions 215 may have through holes 218 through which part of the coil ends 163 can be exposed to the outside.

For instance, the coil supporting members 210 may be formed of a non-magnetic metallic member, and the surfaces thereof may be coated with an insulating member.

Under such configuration, once the rotor coil 160 is wound on the rotor core 151, the coil supporting members 210 may be coupled to two ends of the rotor core 151.

Once the rotor 140 rotates as the electric motor is driven, the coil ends 163 of the rotor coil 160 are supported against a centrifugal force by the outer wall portions 216 of the coil supporting members 210. Accordingly, the occurrence of a short-circuit of the rotor coil 160 can be prevented.

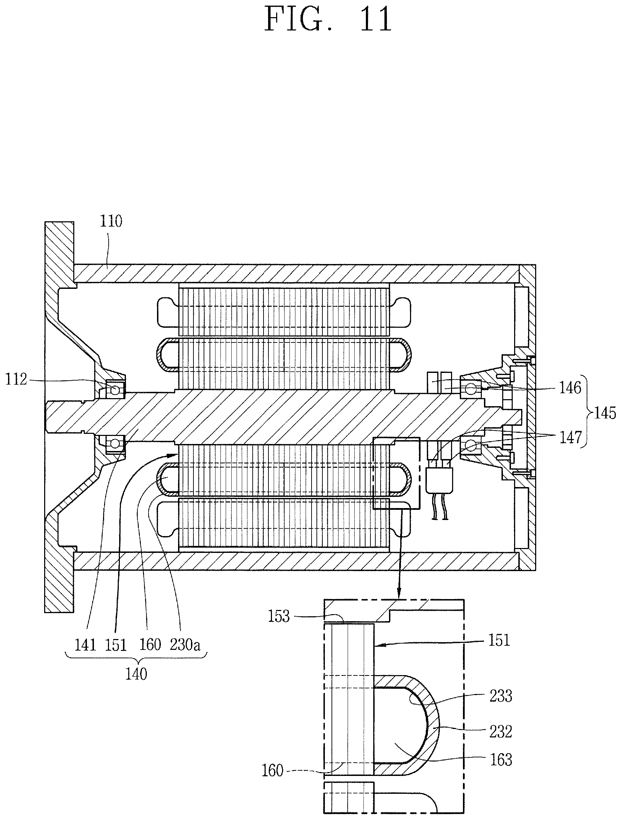

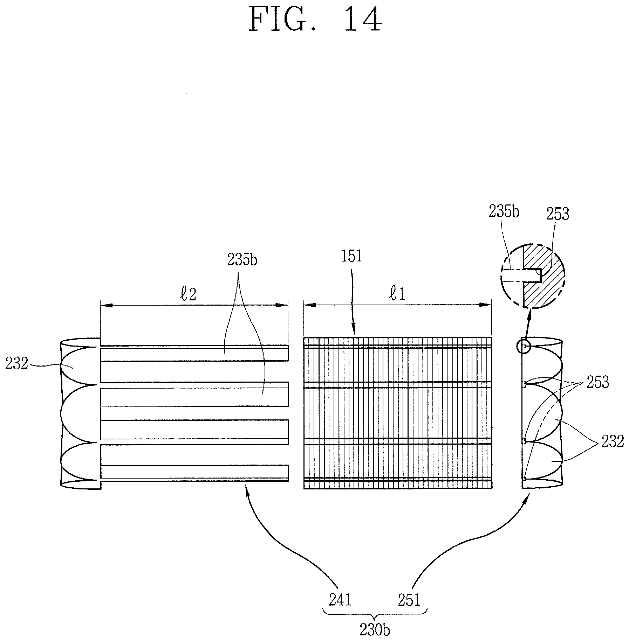

Hereinafter, still another embodiment of the present invention will be explained with reference to FIGS. 11 to 14.

As shown in FIG. 11, the electric motor according to still another embodiment includes a stator 120, and a rotor 140 disposed so as to be rotatable with respect to the stator 120. And, the rotor 140 includes a rotor core 151 having a plurality of poles 155 and slots 159, a shaft 141 coupled to a central portion of the rotor core 151, a rotor coil 160 wound on the rotor core 151, and a coil supporting member 230a provided at the rotor core 151, and configured to support the rotor coil 160 so that the rotor coil 160 cannot be separated from the rotor core 151 in a radial direction when the rotor 140 rotates.

A case 110 may be provided at the outer periphery of the stator 120.

Coil supporting members 230a may be provided at two ends of the rotor core 151.

The coil supporting members 230a may be coupled to the rotor core 151 after the rotor coil 160 is wound on the rotor core 151.

The coil supporting members 230a may be coupled to two sides of the rotor core 151 in an axial direction of the rotor 140.

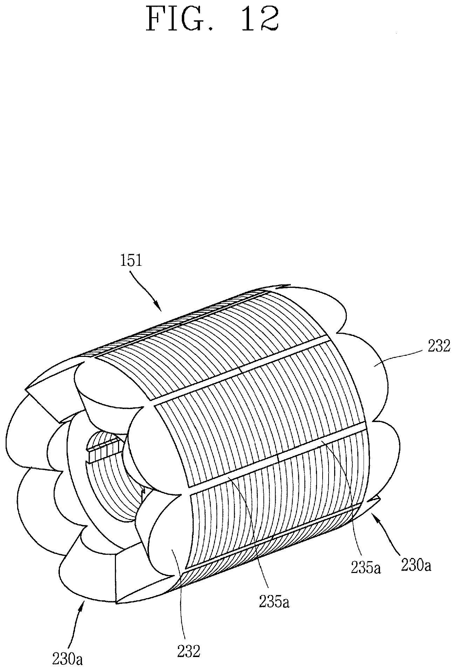

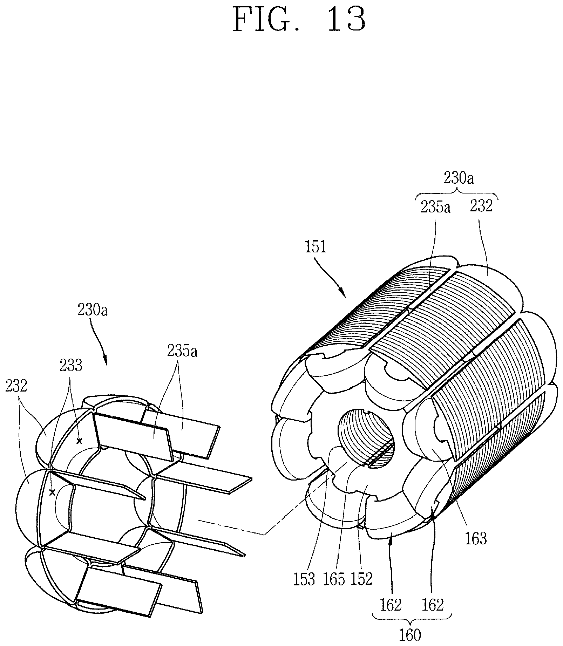

For instance, as shown in FIGS. 12 and 13, the coil supporting member 230a may include coil end accommodation portions 232 for accommodating the coil ends 163 of the rotor coil 160, and supporting plates 235a disposed between the pole shoes 156.

The coil end accommodation portions 232 may be formed in a shape (e.g., arc shape) corresponding to the shape of the coil ends 163.

Each coil end accommodation portion 232 may be provided with an accommodation space 233 therein, the accommodation space for accommodating each coil end 163.

Each coil end accommodation portion 232 may be formed so that the rotor core side thereof can be open.

The coil supporting member 230a may have the same outer diameter as the rotor core 151.

The coil supporting member 230a may be provided with a plurality of supporting plates 235a, each supporting plate 235a inserted into a space between the coil portions 162 wound on the poles 155.

More specifically, each supporting plate 235a may be configured to be simultaneously connected to two neighboring coil end accommodation portions 232. Under such configuration, separation of each coil end accommodation portion 232 from the rotor core 151 due to a centrifugal force when the rotor 140 rotates, can be prevented. Further, gaps between the coil portions 162 are blocked by the supporting plates 235a. This can prevent outward movements of the coil portions 162 wound on the poles 155 by a centrifugal force in a radial direction when the rotor 140 rotates.

Each supporting plate 235a may be disposed in a radial direction of the rotor core 151.

Edges inside each supporting plate 235a may contact the rotor core 151, respectively.

The supporting plate 235a may be formed to have a length shorter than that of the rotor core 151 in an axial direction.

For instance, the supporting plate 235a may have a length corresponding to the half of a length of the rotor core 151 in an axial direction.

As shown in FIG .14, the coil supporting member 230b may include a first coil supporting member 241 disposed at one end of the rotor core 151, and a second coil supporting member 251 disposed at another rend of the rotor core 151. The first coil supporting member 241 includes coil end accommodation portions 232 for accommodating the coil ends 163 of the rotor coil 160, and supporting plates 235b disposed between the pole shoes 156. And, the second coil supporting member 251 includes coil end accommodation portions 232, and insertion portions 253 for inserting another ends of the supporting plates 235b.

The supporting plates 235b of the first coil supporting member 241 may have a length long enough to protrude towards another end of the rotor core 151 by passing through the rotor core 151.

A plurality of insertion portions 253 for inserting the ends of the supporting plates 235b having protruded through the rotor core 151, may be formed at the second coil supporting member 251, respectively. Here, the insertion portions 253 may be configured as grooves and/or holes.

The second coil supporting member 251 may be integrally coupled to the supporting plates 235b of the first coil supporting member 241, thereby supporting the coil ends 163 accommodated therein against a centrifugal force.

The coil supporting members 230a and 230b may be formed of a material having a higher heat transfer performance than the rotor core 151. For instance, the coil supporting members 230a and 230b may be formed of aluminum. Under such configuration, heat of the rotor coil 160 is transferred to two sides of the rotor core 151 through the coil supporting members 230a and 230b (supporting plates). As a result, the temperature of the rotor coil 160 can be prevented from excessively increasing.

The aforementioned fiber or wire-shaped reinforcing members 190 may be provided on the circumferences of the coil supporting members 230a and 230b.

Under such configuration, if the rotor coil 160 has been completely wound on the poles 155 of the rotor core 151, the coil supporting members 230a and 230b may be coupled to two ends of the rotor core 151, respectively. The coil ends 163 of the rotor coil 160 may be accommodated in the coil end accommodation portions 232, and each supporting plate 235a may be inserted into a space between the two neighboring coil portions 162.

Once the rotor 140 is driven to rotate, the coil ends 163 of the rotor coil 160 are supported by the coil end accommodation portions 232 against a centrifugal force. As a result, the rotor coil 160 can be prevented from being separated from the rotor core 151 or from moving in a radial direction, and thus a short-circuit of the rotor coil 160 can be prevented.

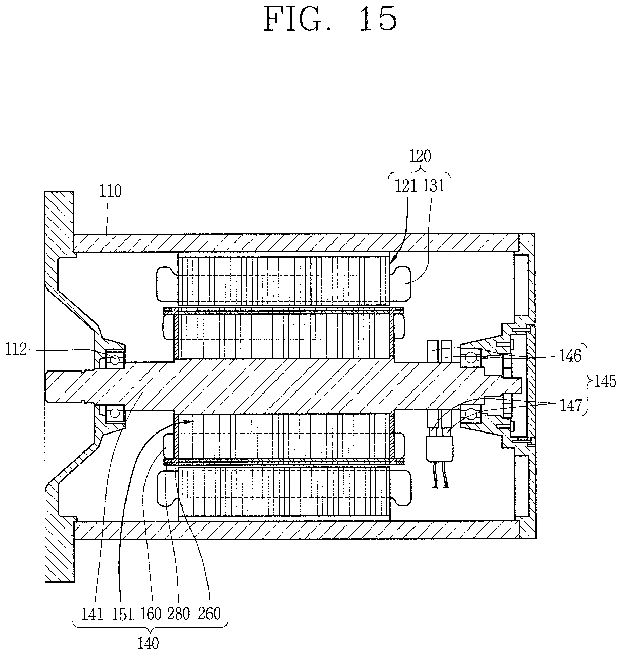

Hereinafter, yet still another embodiment of the present invention will be explained with reference to FIGS. 15 to 18.

As shown in FIG. 15, the electric motor according to yet still another embodiment includes a stator 120, and a rotor 140 disposed so as to be rotatable with respect to the stator 120. And, the rotor 140 includes a rotor core 151 having a plurality of poles 155 and slots 159, a shaft 141 coupled to a central portion of the rotor core 151, a rotor coil 160 wound on the rotor core 151, and coil supporting members 260 provided at the rotor core 151, and configured to support the rotor coil 160 so that the rotor coil 160 can be prevented from being separated from the rotor core 151 in a radial direction when the rotor 140 rotates.

A case 110 may be provided at the outer periphery of the stator 120.

A plurality of poles 155 and slots 159 may be provided at the rotor core 151.

The rotor coil 160 may be provided with a plurality of coil portions 162 wound on the poles 155.

A pole shoe 156 may be provided at the end of each pole 155 of the rotor core 151.

Pole shoes 156 may be formed to have a preset interval (s1) therebetween. Coil supporting members 260 may be provided at two ends of the rotor core 151 in an axial direction.

The coil supporting members 260 may be configured as non-magnetic metallic members (e.g., aluminum, stainless steel, etc.).

The coil supporting members 260 may be insulation-coated with an insulating member.

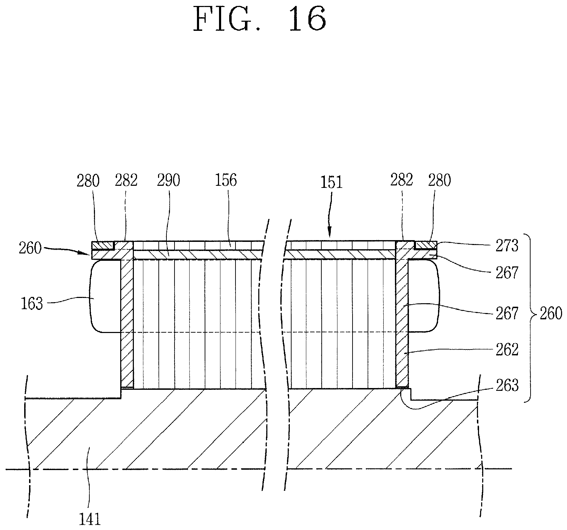

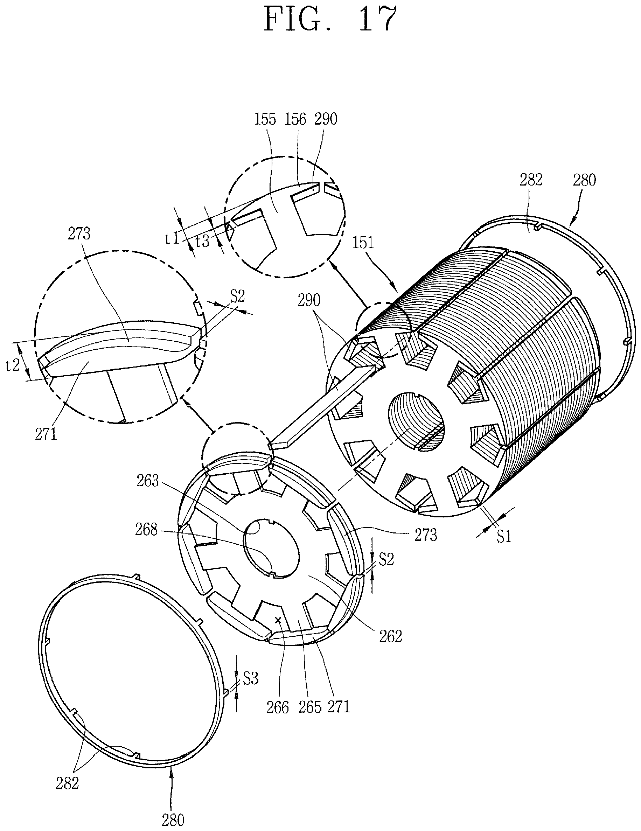

As shown in FIGS. 16 and 17, the coil supporting members 180 may include a hub 262 coupled to the shaft 141, a plurality of spokes 265 extending from the hub 262 in a radial direction, and supporting portions 267 protruding from the ends of the spokes 265 in an axial direction, and configured to support the coil ends 163 of the rotor coil 160.

A shaft hole 263 for inserting the shaft 141 may be penetratingly-formed at the hub 262.

Protrusions 268 protruding in a radial direction may be provided at the shaft hole 262. As the protrusions 268 are inserted into protrusion accommodation portions (not shown) formed on the outer surface of the shaft 141, slip occurring when the rotor rotates can be prevented.

The spokes 265 may be formed to correspond to the poles of the rotor core 151.

For instance, each spoke 265 may be formed to have the same interval and width as each pole 155.

Supporting portions 267 for supporting the coil ends 163 of the rotor coil 160 may be provided at the ends of the spokes 265.

Each supporting portion 267 may protrude from the end of each spoke 265 in an axial direction.

Each supporting portion 267 may have the same length as each pole shoe 156 in a circumferential direction.

The supporting portions 267 may have a preset interval (s2) therebetween.

More specifically, the interval (s2) between the supporting portions 267 may be the same as the interval (s1) between the pole shoes 156.

Guide portions 271 may be formed at two ends of each supporting portion 267 in a circumferential direction.

Each guide portion 271 may be formed in a curved shape so that its length in a circumferential direction can be gradually decreased in a protruding direction of each supporting portion 267. Under such configuration, the interval (s2) between the supporting portions 267 can be gradually increased in a protruding direction of the supporting portions 267. The guide portion 271 may facilitate coupling of reinforcing members 280 to be later explained with the supporting portions 267.

Reinforcing members 280 may be coupled to the coil supporting members 260. This may allow the rotor coil 160 to be more stably supported.

The reinforcing members 280 may have a ring shape.

The reinforcing members 280 may simultaneously contact the outer surfaces of the supporting portions 267.

Reinforcing member coupling portions 273 for coupling the reinforcing members 280 may be formed on the outer surfaces of the supporting portions 267.

The reinforcing member coupling portions 273 may have steps in a shape that the outer surface of the supporting portions 267 are cut to be decreased in a radial direction, in correspondence to the thickness of the reinforcing members 280.

The reinforcing members 280 may be implemented as steel plates having a high intensity and formed in a ring shape.

The reinforcing members 280 may be insulation-coated with an insulating member.

The reinforcing member 280 may be provided with a plurality of insertion protrusions 282 inserted into the interval (s2) between the supporting portions 267 of the coil supporting member 260.

Each insertion protrusion 282 may be configured to have a width (s3) corresponding to the interval (s2) between the supporting portions 267.

The pole shoe 156 and the supporting portion 267 may have thicknesses different from each other.

Preferably, the pole shoe 156 may have a relatively small thickness (t1) for an enhanced output.

Preferably, the supporting portions 267 may have a relatively great thickness (t2) so as to more stably support the coil ends 163 with an increased intensity (supporting intensity).

A spacer 290 may be provided at an inner side of each pole shoe 156.

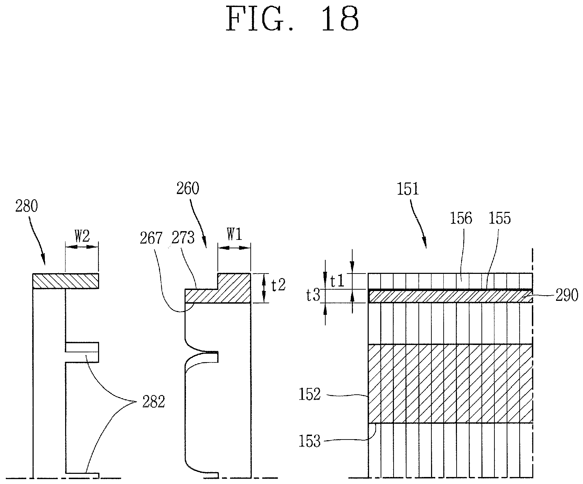

As shown in FIG. 18, the spacer 290 may be configured to have a thickness (t3) corresponding to the difference between the thickness (t1) of the pole shoe 156 and the thickness (t2) of the supporting portion 267. Under such configuration, the inner surface of the spacer 290 and the inner surface of the supporting portion 267 can be disposed on the same plane. As a result, the rotor coil 160 can be easily wound on the rotor core, and the rotor coil 160 having been wound on the rotor core can be stably supported.

The spacer 290 may be formed to have a length corresponding to a length of the rotor core 151 in an axial direction (or laminated thickness). Under such configuration, two ends of the spacer 290 can be coupled to the coil supporting members 260, and then may contact the inner surfaces of the coil supporting members 260, respectively.

For instance, each spacer 290 may be configured to be adhered to the inner surface 157b of each pole shoe 156.

Under such configuration, each spacer 290 may be provided on the inner surface 157b of each pole shoe 156 of the rotor core 151.

The coil supporting members 260 may be provided at two ends of the rotor core 151, and the rotor coil 160 may be wound on the rotor core 151 along the inner surfaces of the spacer 290 and the supporting portions 267, respectively.

Once the rotor coil 160 has been completely wound on the rotor core 151, the reinforcing members 280 may be coupled to the coil supporting members 260. The insertion protrusions 282 of the reinforcing member 280 are guided by the guide portions 271 formed at two ends of each supporting portion 267, so that the reinforcing members 280 can be easily inserted into the coil supporting members 260.

Once the electric motor is driven, power is supplied to the stator coil 131 and the rotor coil 160, respectively. As a magnetic field formed by the stator coil 131 and magnetic poles (N and S poles) formed by the coil portions 162 interact with each other, the rotor 140 rotates about the shaft 141.

The coil supporting members 260 prevents the coil portions 162 of the rotor coil 160 from moving in a radial direction by a centrifugal force when the rotor 140 rotates. Accordingly, the occurrence of a short-circuit of the rotor coil 160 can be prevented.

The electric motor according to the present invention may have the following advantages.

Firstly, in the present invention according to one embodiment, the coil supporting members for supporting the rotor coil are provided outside the rotor coil in a radial direction. Accordingly, a short-circuit of the rotor coil due to a centrifugal force when the rotor rotates, can be prevented.

Secondly, since the coil supporting members are pre-installed at the rotor core, the rotor coil can be wound on the coil supporting members when being wound on the rotor core. As a result, the rotor coil can stably maintain the initially-wound position. This can prevent the rotor coil from being transformed, and/or can prevent a short-circuit of the rotor coil and can prolong the lifespan of the rotor coil.

Thirdly, the coil supporting members are coupled to the rotor core after the rotor coil is wound on the rotor core. This can facilitate a winding operation of the rotor coil.

Fourthly, the supporting plates are provided at the coil supporting members so as to be disposed between the coil portions. This can prevent the rotor coil from moving or being transformed in a radial direction.

Fifthly, since the reinforcing members are provided on the circumference of the coil supporting members, the rotor coil can be more stably supported.

Sixthly, since the coil supporting members are formed of a material having a higher heat transfer performance than the rotor core, temperature increase of the rotor coil can be prevented.

Seventhly, each pole shoe of the rotor core is configured to have a thickness smaller than that of each supporting portion of the coil supporting member, and a spacer is configured to have a thickness corresponding to the difference between the two thicknesses. Accordingly, the thickness of the pole shoe can be reduced. As a result, an output of the electric motor can be enhanced, a winding operation of the rotor coil can be easily performed, and the rotor coil can be stably supported.

The foregoing embodiments and advantages are merely exemplary and are not to be considered as limiting the present disclosure. The present teachings can be readily applied to other types of apparatuses. This description is intended to be illustrative, and not to limit the scope of the claims. Many alternatives, modifications, and variations will be apparent to those skilled in the art. The features, structures, methods, and other characteristics of the exemplary embodiments described herein may be combined in various ways to obtain additional and/or alternative exemplary embodiments.

## Claims

1. An electric motor, comprising:
a stator (120); and
a rotor (140) disposed so as to be rotatable with respect to the stator,
wherein the rotor includes:
a rotor core (151) having a plurality of poles (155) and slots (159);
a shaft (141) coupled to a central portion of the rotor core;
a rotor coil (160) wound on the rotor core; and
coil supporting members (180, 210, 230a, 230b, 260) provided at the rotor core, and configured to support the rotor coil such that the rotor coil is prevented from being separated from the rotor core in a radial direction when the rotor rotates,
wherein the coil supporting members (210, 230a, 230b) are coupled to the rotor core (151) after the rotor coil (160) is wound on the rotor core,
wherein each pole is provided with a pole shoe (156) extending in a circumferential direction, and
wherein the coil supporting member (230a, 230b) includes:
coil end accommodation portions (232) for accommodating the coil ends of the rotor coil (160); and
supporting plates (235a) disposed between the pole shoes.

2. The electric motor of claim 1, wherein the coil supporting member (210, 230a, 230b) is coupled to the rotor core in an axial direction of the rotor core (160).

3. The electric motor of claim 1 or 2, wherein the coil supporting member (230a) is provided with an outer circumference having the same diameter as that of an outer circumference of the rotor core (151), and
wherein the coil end accommodation portions (232) and the supporting plates (235a) are integrally formed with each other.

4. The electric motor of any one of the preceding claims, wherein the coil supporting members (180, 210, 230a, 230b, 262) are formed of a material having a higher heat transfer performance than the rotor core (151).

5. The electric motor of any one of the preceding claims, wherein the coil supporting member (180, 210, 230a, 230b) is formed of a non-magnetic metallic member, and the surface thereof is coated with an insulating member.

6. The electric motor of claim 1, wherein the coil supporting member (230b) includes:
a first coil supporting member (241) disposed at one end of the rotor core (151), and having the coil end accommodation portions (232) and the supporting plates (235b) integrally formed with each other; and
a second coil supporting member (251) disposed at another end of the rotor core (151), and having the coil end accommodation portions (232), and insertion portions (253) for inserting the ends of the supporting plates of the first coil supporting member.

7. The electric motor of claim 3, wherein the rotor coil (160) is provided with a plurality of coil portions wound on the circumference of each pole, and
wherein the coil supporting members (230a) are coupled to two ends of the rotor core in an axial direction, such that the coil ends are inserted into the coil end accommodation portions, and such that the supporting plate is inserted into a space between the coil portions.

## Patentansprüche

1. Elektromotor mit:
einem Ständer (120) und
einem Rotor (140), der gegenüber dem Ständer drehbar angeordnet ist,
wobei der Rotor aufweist:
einen Rotorkern (151) mit mehreren Polen (155) und Schlitzen (159),
eine mit einem Mittelbereich des Rotorkerns verbundene Welle (141),
eine auf den Rotorkern gewickelte Rotorspule (160), und
am Rotorkern vorgesehene Spulenabstützelemente (180, 210, 230a, 230b, 260), die ausgebildet sind, um die Rotorspule so abzustützen, dass eine Trennung der Rotorspule vom Rotorkern in einer radialen Richtung bei Rotation des Rotors verhindert wird,
wobei die Spulenabstützelemente (210, 230a, 230b) nach Aufwickeln der Rotorspule auf den Rotorkern mit dem Rotorkern (151) gekoppelt werden,
wobei an jedem Pol ein sich in einer Umfangsrichtung erstreckender Polschuh (156) vorgesehen ist und
wobei das Spulenabstützelement (230a, 230b) aufweist:
Spulenendeaufnahmeabschnitte (232) zur Aufnahme der Spulenenden der Rotorspule (160) und
zwischen den Polschuhen angeordnete Abstützplatten (235a).

2. Elektromotor nach Anspruch 1, wobei das Spulenabstützelement (210, 230a, 230b) mit dem Rotorkern in einer axialen Richtung des Rotorkerns (160) gekoppelt ist.

3. Elektromotor nach Anspruch 1 oder 2, wobei das Spulenabstützelement (230a) einen Außenumfang aufweist, welcher denselben Durchmesser wie ein Außenumfang des Rotorkerns (151) aufweist, und
wobei die Spulenendeaufnahmeabschnitte (232) und die Abstützplatten (235a) einstückig ausgebildet sind.

4. Elektromotor nach einem der vorhergehenden Ansprüche, wobei die Spulenabstützelemente (180, 210, 230a, 230b, 262) aus einem Material gebildet sind, welches eine höhere Wärmeübertragungsleistung aufweist als der Rotorkern (151).

5. Elektromotor nach einem der vorhergehenden Ansprüche, wobei das Spulenabstützelement (180, 210, 230a, 230b) aus einem nichtmagnetischen metallischen Element gebildet ist, dessen Oberfläche mit einem Isoliermaterial beschichtet ist.

6. Elektromotor nach Anspruch 1, wobei das Spulenabstützelement (230b) aufweist:
ein an einem Ende des Rotorkerns (151) angeordnetes erstes Spulenabstützelement (241), dessen Spulenendeaufnahmeabschnitte (232) und dessen Abstützplatten (235b) einstückig ausgebildet sind, und
ein am anderen Ende des Rotorkerns (151) angeordnetes zweites Spulenabstützelement (251), welches die Spulenendeaufnahmeabschnitte (232) und Einsetzabschnitte (253) zum Einsetzen der Enden der Abstützplatten des ersten Spulenabstützelements aufweist.

7. Elektromotor nach Anspruch 3, wobei die Rotorspule (160) mehrere umfänglich auf jeden Pol aufgewickelte Spulenabschnitte aufweist und
wobei die Spulenabstützelemente (230a) in einer axialen Richtung mit zwei Enden des Rotorkerns gekoppelt sind, so dass die Spulenenden in die Spulenendeaufnahmeabschnitte und die Stützplatte in einen Raum zwischen den Spulenabschnitten eingesetzt werden.

## Revendications

1. Moteur électrique, comprenant :
un stator (120) ; et
un rotor (140) monté de manière à être rotatif par rapport au stator,
ledit rotor comportant :
un noyau (151) de rotor présentant une pluralité de pôles (155) et de fentes (159) ;
un arbre (141) raccordé à une partie centrale du noyau de rotor ;
une bobine (160) de rotor enroulée sur le noyau de rotor ; et
des éléments de support (180, 210, 230a, 230b, 260) de bobine disposés sur le noyau de rotor, et prévus pour supporter la bobine de rotor de manière à empêcher une séparation de la bobine de rotor d'avec le noyau de rotor dans la direction radiale quand le rotor tourne,
où les éléments de support (210, 230a, 230b) de bobine sont reliés au noyau (151) de rotor après enroulement de la bobine (160) de rotor sur le noyau de rotor,
où chaque pôle est pourvu d'une pièce polaire (156) s'étendant dans la direction circonférentielle, et
où l'élément de support (230a, 230b) de bobine comprend :
des parties de réception (232) d'extrémité de bobine destinées à recevoir les extrémités de la bobine (160) de rotor ; et
des plaques de support (235a) disposées entre les pièces polaires.

2. Moteur électrique selon la revendication 1, où l'élément de support (210, 230a, 230b) de bobine est raccordé au noyau de rotor dans la direction axiale du noyau (160) de rotor.

3. Moteur électrique selon la revendication 1 ou la revendication 2, où l'élément de support (230a) de bobine présente une circonférence extérieure ayant le même diamètre que la circonférence extérieure du noyau (151) de rotor, et
où les parties de réception (232) d'extrémité de bobine et les plaques de support (235a) sont formées d'un seul tenant.

4. Moteur électrique selon l'une des revendications précédentes, où les éléments de support de bobine (180, 210, 230a, 230b, 262) sont constitués d'un matériau doté d'une efficacité de transfert thermique supérieure à celle du noyau de rotor (151).

5. Moteur électrique selon l'une des revendications précédentes, où l'élément de support de bobine (180, 210, 230a, 230b) est formé par un élément en métal non magnétique, dont la surface est revêtue d'un élément isolant.

6. Moteur électrique selon la revendication 1, où l'élément de support de bobine (230b) comprend :
un premier élément de support de bobine (241) disposé à une extrémité du noyau de rotor (151), et présentant les parties de réception (232) d'extrémité de bobine et les plaques de support (235b) formées d'un seul tenant ; et
un deuxième élément de support de bobine (251) disposé à une autre extrémité du noyau de rotor (151), et présentant les parties de réception (232) d'extrémité de bobine, et des parties d'insertion (253) pour l'engagement des extrémités des plaques de support du premier élément de support de bobine.

7. Moteur électrique selon la revendication 3, où la bobine de rotor (160) est pourvue d'une pluralité de parties de bobine enroulées sur la circonférence de chaque pôle, et où les éléments de support de bobine (230a) sont raccordés à deux extrémités du noyau de rotor dans la direction axiale, de sorte que les extrémités de bobine sont insérées dans les parties de réception d'extrémité de bobine, et que la plaque de support est insérée dans un espace entre les parties de bobine.
